# EUROPEAN PATENT APPLICATION

(11) **EP 2 796 350 A1**
(43) Date of publication of application: **29.10.2014**
(21) Application number: 12858797.9
(22) Date of filing: 19.12.2012
(51) Int. Cl.: B62J 37/00, B62J 9/00, B62J 11/00, B62K 19/30, B62M 7/12

(54) **STRADDLE-TYPE ELECTRIC VEHICLE**

(30) Priority: 22.12.2011 JP 2011281201; 06.12.2012 JP 2012267352
(71) Applicant: Yamaha Hatsudoki Kabushiki Kaisha, Iwata-shi, Shizuoka 438-8501 (JP)
(72) Inventor: IGARASHI Takeshi, Iwata-shi Shizuoka 438-8501 (JP)
(74) Representative: Grünecker, Kinkeldey, Stockmair & Schwanhäusser
(86) International application number: PCT/JP2012/082956
(87) International publication number: WO 2013/094649

(57) **Abstract**

A swing arm 47 is pivotably supported by a body frame 2 and supports a wheel 4. A motor 5 is supported on the swing arm 47 to drive the wheel 4. A battery 6 is supported by the body frame 2. A cable 81 feeds electric power from the battery 6 to the motor 5. Part of the cable 81 is laid out along a lateral side face 6b of the battery 6 so as to form a bent portion.

## Description

### Technical Field

The present invention relates to a straddle-type electric vehicle.

### Background Art

A motor which drives a wheel of a straddle-type electric vehicle and a battery which supplies electric power to the motor are connected by a power feeding cable. Since the motor is provided on a swing arm which pivots vertically according to road face conditions, a distance between the battery and the motor changes as the swing arm pivots, there may be a situation in which a tensile load is produced in the power feeding cable.

With a view to mitigating this load, there is known a technique in which a portion where the power feeding cable can be bent is provided in a halfway position along the length of a path where the power feeding cable is laid out, so that the power feeding cable can be deformed to follow the displacement of the swing arm (for example, see Patent Document 1).

### Prior Art Document

[Patent Document 1] International Publication No. WO2011/033613

### Summary of the Invention

### Problem to be solved by the Invention

In the case of the straddle-type electric vehicle, since a large number of constituent parts are accommodated in a limited space, it is difficult to provide a place where the power feeding cable is allowed to bend. For example, in the configuration disclosed in Patent Document 1, a cable extending from a battery is once laid out to be at an upper portion of a vehicle body and is then laid out to be at a lower portion of the vehicle body again so as to be connected to a motor on a swing arm. It is desirable that a power feeding cable should be as short as possible from the viewpoint of reliable connection, space saving and light weight. However, the necessity of providing a bend in the cable constitutes a cause to prevent the reduction in length of the cable.

Consequently, an object of the invention is to provide a technique to meet the demand for a shorter power feeding cable although the power feeding cable is laid out so as to mitigate a tensile load attributed to the movement of a swing arm.

### How to Solve the Problem

In order to achieve the above object, according to one aspect of the present invention, there is provided a straddle-type electric vehicle, comprising:
a body frame;
a wheel;
a swing arm pivotably supported by the body frame and supporting the wheel;
a motor supported on the swing arm to drive the wheel;
a battery supported by the body frame; and
a cable for feeding electric power from the battery to the motor,
wherein part of the cable is laid out along a lateral side face of the battery so as to form a bent portion.

With this configuration, a tensile load produced in the power feeding cable by pivot movement of the swing arm can be mitigated by correspondingly bending or stretching of the bent portion. By making use of the space which is formed inherently on the side of the lateral side face of the battery as the cable accommodation space to a largest extent, it is possible to connect the battery and the electric motor in a shortest distance. Consequently, it is possible to meet the demand for a shorter cable while mitigating the tensile load caused by the pivot movement of the swing arm by the bent portion.

In a case where the battery exhibits a rectangular parallelepiped shape, and where the lateral side face of the battery extends along a longitudinal direction of the rectangular parallelepiped shape, almost the whole length of the power feeding cable is allowed to extend along the lateral side face, thereby making it possible to form the bent portion easily.

In a case where the lateral side face of the battery is a flat side face facing a left-to-right direction, there is no such situation that the lateral side face prevents the bending or stretching of the power feeding cable which occurs in association with the pivot movement of the swing arm. Consequently, the tensile load produced in the power feeding cable by the pivoting swing arm can be mitigated smoothly.

In a case where the cable is laid out in a space formed between the lateral side face of the battery and the body frame, the dead space which is inherently formed as a result of the battery being disposed in the way described above can be made use of as the cable accommodation space to the largest extent. Additionally, the power feeding cable is allowed to bend or stretch along the lateral side face of the battery by the relatively narrow space. Consequently, the tensile load produced in the power feeding cable by the pivoting swing arm can be mitigated smoothly.

In a case where one end of the cable is connected to an upper part of the battery, an electrical connecting portion where the power feeding cable and the battery are electrically connected can be positioned further away from the ground, and therefore, it is possible to protect the electrical connecting portion from small stones which are thrown up while the vehicle is running.

### Brief Description of the Drawings

Fig. 1 is a left side view showing a two-wheeled electric vehicle according to an embodiment of the invention.
Fig. 2 is a left side view of the two-wheeled electric vehicle shown in Fig. 1 with some of constituent components removed therefrom.
Fig. 3 is a right side view showing a rear part of the two-wheeled electric vehicle shown in Fig. 1.
Fig. 4 is a plan view showing the inside of side covers of the two-wheeled electric vehicle shown in Fig. 1.
Fig. 5 is a right side view showing a relationship between a pivot movement of a swing arm and bending or stretching of a power feeding cable of the two-wheeled electric vehicle shown in Fig. 1.
Fig. 6 is a right side view showing a relationship between a pivot movement of a swing arm and bending or stretching of a power feeding cable of the two-wheeled electric vehicle wherein a battery arrangement is modified.

Referring to the accompanying drawings, the invention will be described in detail below. In the individual drawings for use in the following description, the scales are changed as required so that individual constituent members are illustrated in good sizes for recognition.

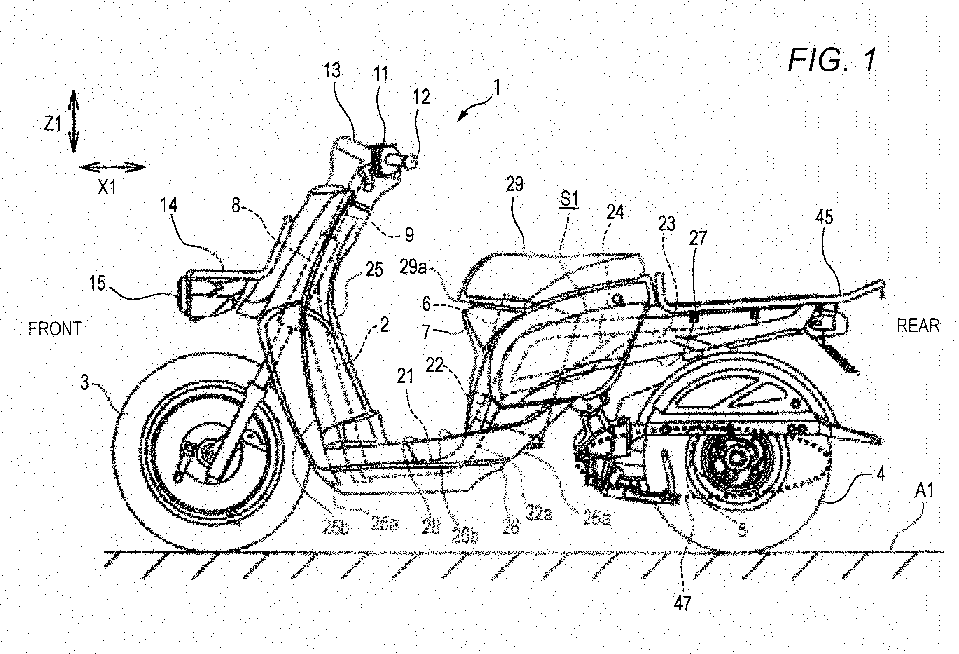

Fig. 1 is a left side view showing a two-wheeled electric vehicle according to an embodiment of the invention. In this embodiment, a two-wheeled electric vehicle 1 which takes the form of a scooter will be described as a straddle-type electric vehicle. The two-wheeled electric vehicle 1 can run with luggage placed at a front portion and a rear portion thereof and is suitable for application to a luggage carrying vehicle.

Directions denoted as front and rear, top and bottom, as well as left and right are based on a standard posture of the two-wheeled electric vehicle 1 which corresponds to a state in which the two-wheeled electric vehicle 1 runs straight ahead on a horizontal plane and the point of view of a rider when the rider faces the front of the vehicle. In addition, the configuration of the two-wheeled electric vehicle 1 will be described based on the two-wheeled electric vehicle 1 in such a state that the vehicle stands erect, a front wheel 3 and a rear wheel 4 are in contact with a road face A1, and the vehicle is in an unloaded state without a rider.

The two-wheeled electric vehicle 1 comprises a body frame 2, the front wheel 3, the rear wheel 4, an electric motor 5, a battery 6, and a body cover 7. In the two-wheeled electric vehicle 1, the electric motor 5 is driven by electric power supplied from the battery 6, and the rear wheel 4 is driven by the output of the electric motor 5. The electric motor 5 is accommodated in a swing arm 47 which is disposed in the rightward of the rear wheel 4. Hereinafter, an overall construction of the two-wheeled electric vehicle 1 will be described sequentially from the front of a vehicle body.

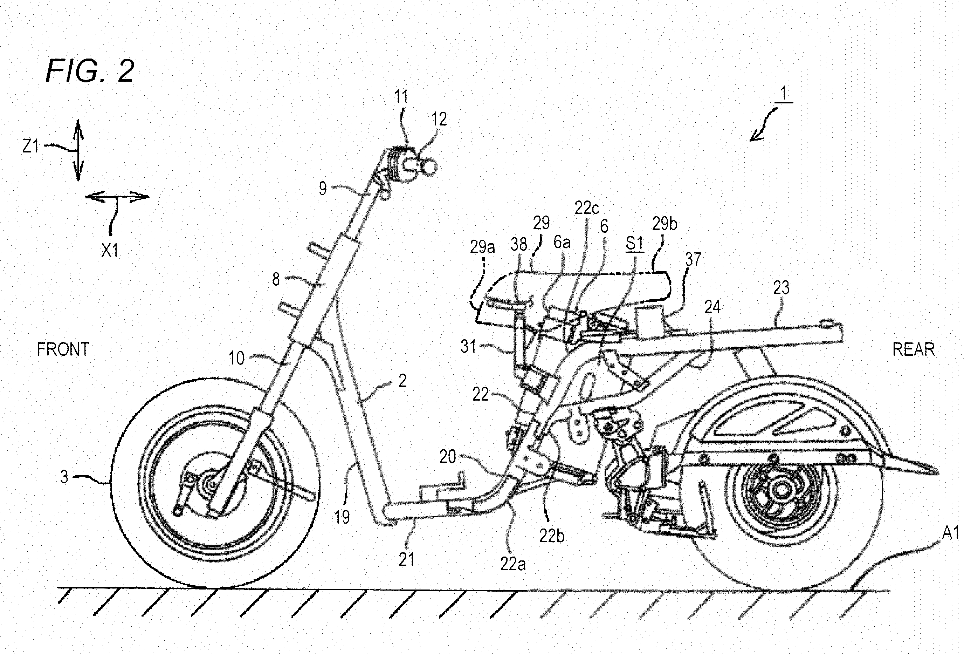

Fig. 2 is a left side view of the two-wheeled electric vehicle shown in Fig. 1 with some of constituent components removed therefrom. The two-wheeled electric vehicle 1 has a head pipe 8 which is disposed at a front upper portion of the two-wheeled electric vehicle 1. A steering shaft 9 is inserted rotatably in the head pipe 8. A front fork 10 having a pair of left and right fork legs is mounted at a lower end portion of the steering shaft 9. The front wheel 3 is attached to the front fork 10.

A handlebar 11 is mounted at an upper end portion of the steering shaft 9. The rider controls the handlebar 11 so as to turn the steering shaft 9, the front fork 10 and the front wheel 3 around an axis of the steering shaft 9.

Grips 12 are provided individually at both left and right end portions of the handlebar 11 (only a left grip is shown). A right grip constitutes a throttle grip. The rider turns the throttle grip so as to control the output of the electric motor 5.

As shown in Fig. 1, a meter 13 is provided in the vicinity of a center of the handlebar 11. A luggage rack 14 is disposed below the meter 13. The luggage rack 14 is fixed to the head pipe 8. The load of luggage placed on the luggage rack 14 acts mainly on the front wheel 3 via the head pipe 8 and the steering shaft 9. A headlamp 15 is fixed to a lower portion of the luggage rack 14.

As shown in Fig. 2, the two-wheeled electric vehicle 1 comprises a body frame 2 which extends rearwards from the head pipe 8. The body frame 2 is formed by using a steel pipe member or the like. The body frame 2 comprises a down tube 19 and a frame main body 20 which is disposed in rearward of the down tube 19. The down tube 19 extends obliquely downwards and rearwards from a lower portion of the head pipe 8. When seen from the side, the frame main body 20 extends rearwards from a lower end portion of the down tube 19, and a halfway portion of the frame main body 20 in relation to a front-to-rear direction X1 of the vehicle is formed into an S shape.

The frame main body 20 includes a pair of left and right frame main bodies. The frame main body 20 includes a first frame portion 21, a second frame portion 22, a third frame portion 23, and a fourth frame portion 24. The first frame portion 21 extends substantially straight and rearwards from the lower end portion of the down tube 19 and is slightly inclined obliquely upwards and rearwards.

The second frame portion 22 is formed into an S shape when seen from the side. The second frame portion 22 includes a lower end portion 22a, a middle portion 22b, and an upper end portion 22c. The lower end portion 22a of the second frame portion 22 is formed into a curved shape and is connected to a rear end portion of the first frame portion 21. The middle portion 22b of the second frame portion 22 extends obliquely upwards rearwards from the lower end portion 22a. When seen from the side, an inclination angle of the middle portion 22b in relation to the first frame portion 21 is, for example, 45 degrees or thereabout. The upper end portion 22c of the second frame portion 22 is formed into a curved shape and is connected to the middle portion 22b.

The third frame portion 23 extends rectilinearly from the upper end portion 22c and is slightly inclined obliquely upwards and rearwards. The fourth frame portion 24 extends rearwards from the middle portion 22b of the second frame portion 22, is curved obliquely upwards in a halfway position and is connected to a middle portion of the third frame portion 23.

As shown in Fig. 1, the two-wheeled electric vehicle 1 comprises the body cover 7 which is attached to the body frame 2. The body cover 7 comprises a front cover 25 which covers the head pipe 8, a lower cover 26 which extends downwards from a lower portion of the front cover 25, and a rear cover 27 which is disposed in rearward of the front cover 25.

The front cover 25 surrounds part of the steering shaft 9 and the head pipe 8 and also surrounds the down tube 19. The lower cover 26 extends rearwards from a lower portion 25a of the front cover 25 and covers the first frame portions 21 and the lower end portions 22a of the second frame portions 22 from the below, the left, and the right thereof. A foot rest portion 28 is disposed at an upper end portion of the lower cover 26. The foot rest portion 28 is provided so that the rider rests his or her feet thereon and is made substantially flat.

The rear cover 27 is shaped, as a whole, so as to extend obliquely upwards and rearwards from a rear portion 26a of the lower cover 26. The rear cover 27 covers areas of the second frame portions 22 excluding the lower end portions 22a from the front, the left, and the right thereof. Additionally, the rear cover 27 covers the third frame portions 23 and the fourth frame portions 24 from the front, the left, and the right thereof.

A seat 29 is disposed above the rear cover 27. The feet of the rider sitting on the seat 29 rest on the foot rest portion 28 while the two-wheeled electric vehicle 1 is running. In the front-to-rear direction X1, the foot rest portion 28 is disposed between a rear face 25b of the front cover 25 and a front end portion 29a of the seat 29. Additionally, the seat 29 is disposed above the second frame portions 22, part of the third frame portions 23, and part of the fourth frame portions 24. A space surrounded by the seat 29 and the rear cover 27 defines an accommodation space S1.

As shown in Fig. 2, the seat 29 is supported by a first bracket 31 and a support bracket 37, constituting part of an external face of the vehicle body. The first bracket 31 is mounted at the middle portions 22b of the second frame portions 22. The first bracket 31 extends upwards from the middle portions 22b. A hinge portion 38 is provided at an upper end portion of the first bracket 31. The seat 29 is supported by the first bracket 31 via the hinge portion 38. The first bracket 31 supports the seat 29 from the below thereof. The seat 29 can pivot about the hinge portion 38. The accommodation space S1 can be opened upwards by causing the seat 29 to pivot about the hinge portion 38. It is noted that the hinge portion 38 may be omitted so that the seat 29 is fixed directly to the first bracket 31.

A rear portion 29b of the seat 29 is supported by the support bracket 37. The support bracket 37 is fixed to the third frame portions 23 of the body frame 2 and is shaped so as to project upwards from the third frame portions 23.

The battery 6, which is a power supply for the electric motor 5, is disposed below the seat 29. The battery 6 is disposed between the pair of left and right second frame portions 22. The battery 6 is a rechargeable secondary battery. When seen from the side, the battery 6 has a substantially rectangular shape in which a length (a height) in a vertical direction Z1 of the vehicle is longer than a length (a width) in the front-to-rear direction X1. The battery 6 is disposed in a posture in which the battery 6 is inclined obliquely rearwards with its front lying higher than its rear and is supported on the body frame 2. An upper portion 6a of the battery 6 is disposed between the first bracket 31 and the support bracket 37.

As shown in Fig. 1, a luggage rack 45 is disposed at the rear of the seat 29. The luggage rack 45 is disposed on the third frame portions 23 to be supported by the third frame portions 23. Luggage can be placed on the luggage rack 45. The load of the luggage placed on the luggage rack 45 is borne mainly by the rear wheel 4.

In this way, the luggage rack 14, the battery 6 which is heavy, and the luggage rack 45 are disposed so as to be aligned in the front-to-rear direction X1. Consequently, when luggage is placed on the luggage rack 14 and the luggage rack 45, the load of the two-wheeled electric vehicle 1 can be balanced evenly in the front-to-rear direction X1. Consequently, even with the luggage placed on the luggage rack 14 and the luggage rack 45, it is possible to maintain the high controllability of the two-wheeled electric vehicle 1.

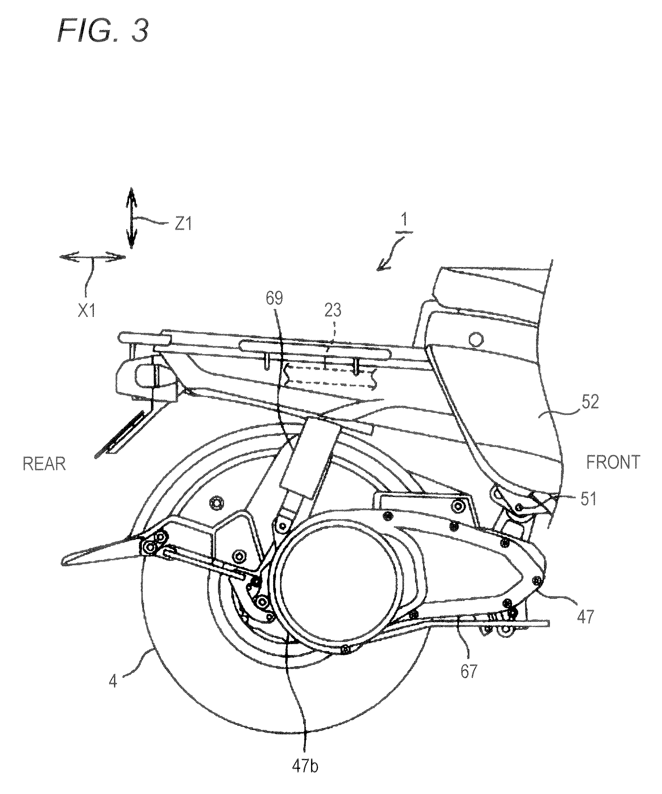

Fig. 3 is a right side view showing a rear portion of the two-wheeled electric vehicle 1. The two-wheeled electric vehicle 1 comprises the swing arm 47 which is supported so as to pivot about a pivot shaft 51 relative to the body frame 2. The swing arm 47 supports the rear wheel 4 which serves as the wheel of the invention. The electric motor 5, which serves as the motor of the invention to drive the rear wheel 4, is installed in the swing arm 47 together with a motor controller or the like. Side covers 52 are provided above the pivot shaft 51.

The swing arm 47 is disposed in rightward of the rear wheel 4. A rear portion 47b of the swing arm 47 is connected to the third frame portion 23 via a shock absorber 69. With this configuration, a shock produced when the swing arm 47 pivots can be attenuated and absorbed by the shock absorber 69.

When seen from the side, the swing arm 47 is disposed below the third frame portion 23. A motor case 67 of the swing arm 47 is shaped so that a length in the front-to-rear direction X1 is longer than a length in the vertical direction when seen from the side.

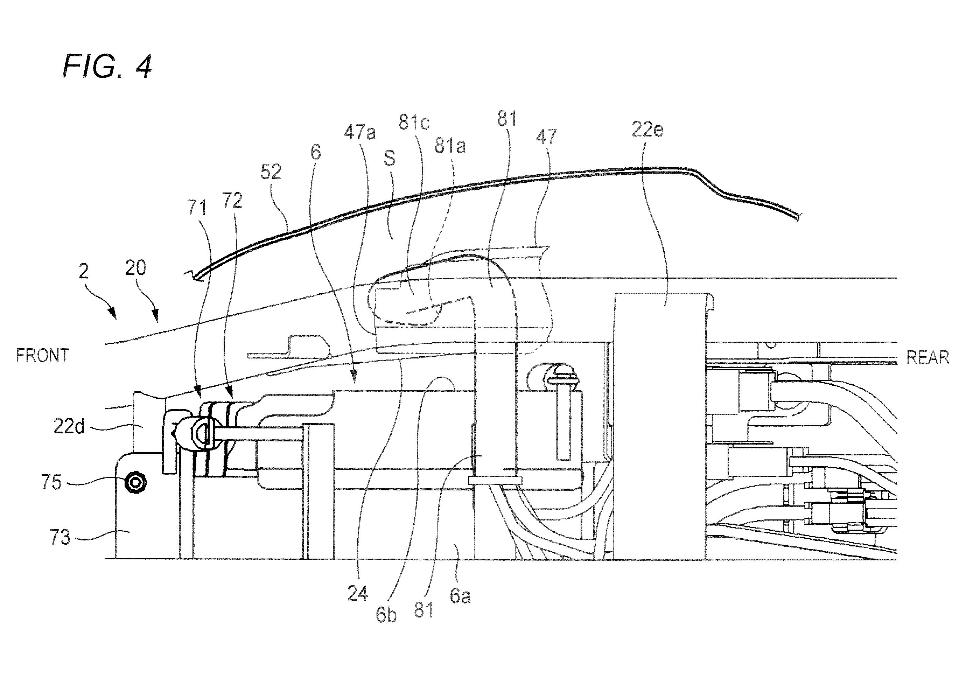

Fig. 4 is a plan view showing a configuration inside the side covers 52. The battery 6 is disposed between the second frame portions 22 with a support member 72 including a pedestal 71 installed and is supported on the body frame 2. Specifically, the battery 6 is introduced between the second frame portions 22 from thereabove, whereby fixing piece portions 73 (only a front one is shown) provided at the front and rear of the pedestal 71 of the battery 6 rest on brackets 22d, 22e which bridge the second frame portions 22. In this state, the fixing piece portions 73 and the brackets 22d, 22e are fastened together with bolts 75, whereby the pedestal 71 is fixed to the individual brackets 22d, 22e.

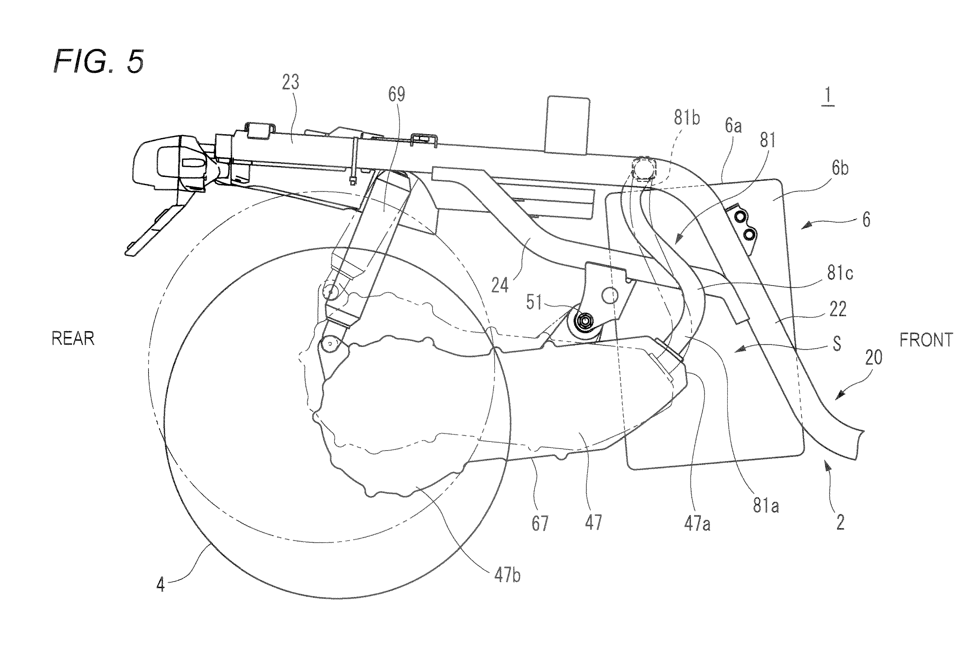

As shown in Figs. 4 and 5, the swing arm 47 which comprises the electric motor 5 and the battery 6 are connected by a power feeding cable 81 which serves as the cable of the invention. The power feeding cable 81 is connected to a front portion 47a of the swing arm 47 at a lower end 81a and is connected to an upper portion 6a of the battery 6 at a lower end 81b thereof. The power feeding cable 81 supplies electric power from the battery 6 to the electric motor 5.

The battery 6 exhibits a rectangular parallelepiped shape. A lateral side face 6b thereof is made into a face which extends along a longitudinal direction of the rectangular parallelepiped shape. The lateral side face 6b of the battery 6 is a flat face which faces a left-to-right direction of the vehicle.

When the battery 6 configured in the way described above is mounted on the body frame 2, a space following the lateral side face 6b of the battery 6 is defined between the lateral side face 6b of the battery 6 and the body frame 2, and this space constitutes a cable accommodation space S where the power feeding cable 81 can be laid out.

The power feeding cable 81 is laid out so as to extend along the lateral side face 6b of the battery 6 which is supported on the body frame 2 as a result of part of the power feeding cable 81 being accommodated in the cable accommodation space S. Additionally, by loosening the power feeding cable 81 within the cable accommodation space S which is the cable layout portion, a bent portion 81c is formed in the power feeding cable 81. A tensile load produced in the power feeding cable 81 by the pivot movement of the swing arm 47 can be mitigated by bending and stretching of the bent portion 81c as indicated by a solid line and a dashed chain line in Fig. 5. Here, the solid line denotes a state in which the rear wheel 4 is positioned lowest (a state in which the shock absorber 69 extends), while the dashed chain line denotes a state in which the rear wheel 4 is positioned highest (a state in which the shock absorber 69 contracts).

It is desired that the power feeding cable 81 should be as short as possible from the viewpoint of reliable connection, space saving and light weight. However, in the straddle-type electric vehicle such as the two-wheeled electric vehicle 1, since a large number of constituent parts are accommodated in a limited space, a space where to lay out the power feeding cable 81 in which the bent portion 81c is formed to absorb the load of the pivoting swing arm 47 is limited. Consequently, in general, it is required that the power feeding cable 81 with the bent portion 81 c formed therein is laid out while being directed in various directions in the limited space, this making it difficult to shorten the length of the power feeding cable 81.

According to the configuration of this embodiment, part of the power feeding cable 81 is laid out in such a way as to form the bent portion 81 c along the lateral side face 6b of the battery 6. By making use of the space which is formed inherently on the side of the lateral side face 6b of the battery 6 as the cable accommodation space S to a largest extent, it is possible to connect the battery 6 and the electric motor 5 in a shortest distance. Consequently, it is possible to meet the demand for a shorter cable while mitigating the tensile load caused by the pivot movement of the swing arm 47 by the bent portion 81c.

In this embodiment, the space formed in the side of the lateral side face 6b of the rectangular parallelepiped battery 6 which extends along the longitudinal direction of the rectangular parallelepiped shape is made use of as the cable accommodation space S. Because of this, almost the whole length of the power feeding cable 81 is allowed to extend along the lateral side face 6b, thereby making it possible to form the bent portion 81c easily.

Additionally, since the lateral side face 6b is the flat side face which faces the left-to-right direction of the vehicle, there is no such situation that the lateral side face 6b prevents the bending or stretching of the power feeding cable 81 which occurs in association with the pivot movement of the swing arm 47. Consequently, the tensile load produced in the power feeding cable 81 by the pivoting swing arm 47 can be mitigated smoothly.

Further, the power feeding cable 81 is laid out within the space formed between the lateral side face 6b and the body frame 2. The dead space which is inherently formed as a result of the battery 6 being disposed in the way described above can be made use of as the cable accommodation space S to the largest extent. Additionally, the power feeding cable 81 is allowed to bend or stretch along the lateral side face 6b of the battery 6 by the relatively narrow space. Consequently, the tensile load produced in the power feeding cable 81 by the pivoting swing arm 47 can be mitigated smoothly.

In this embodiment, an upper end 81a of the power feeding cable 81 is connected to an upper portion 6a of the battery 6. Namely, an electrical connecting portion where the power feeding cable 81 and the battery 6 are electrically connected can be positioned farther away from the ground, and therefore, it is possible to protect the electrical connecting portion from small stones which are thrown up while the vehicle is running.

The embodiment that has been described heretofore is intended to facilitate the understanding of the invention and is not intended to limit the invention. It is obvious that the invention can be modified or improved variously without departing from the spirit and scope thereof and that equivalents thereof are comprised in the invention.

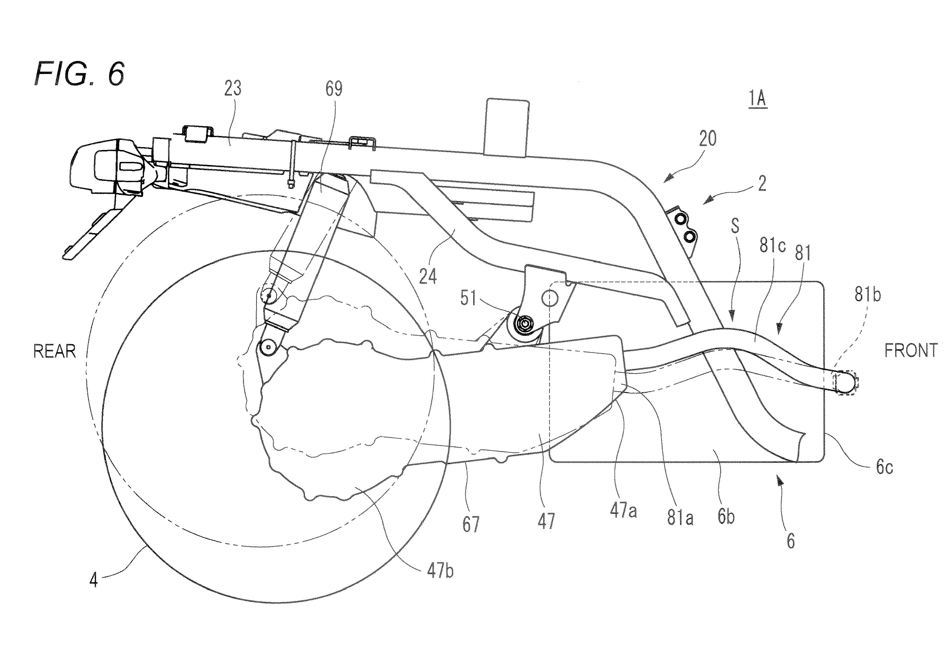

The disposition of the battery 6 is not limited to the configuration of the embodiment. For example, as shown in Fig. 6, a battery 6 may be disposed so that the longitudinal direction of the rectangular parallelepiped battery 6 is oriented in the front-to-rear direction of the vehicle. As this occurs, a power feeding cable 81 extending from a swing arm 47 is connected to a front portion 6c of the battery 6 which is disposed at a position closer to the front end of the vehicle.

Also, in the case of a two-wheeled electric vehicle 1A in which the battery 6 is disposed in the way described above, a space following a lateral side face 6b of the battery 6 is formed between the lateral side face 6b of the battery 6 and the body frame 2, and this space constitutes a cable accommodation space S where the power feeding cable 81 can be laid out.

The power feeding cable 81 is laid out so as to extend along the lateral side face 6b of the battery 6 which is supported on the body frame 2 as a result of part of the power feeding cable 81 being accommodated in the cable accommodation space S. Additionally, by loosening the power feeding cable 81 within the cable accommodation space S which is the cable layout portion, a bent portion 81c is formed in the power feeding cable 81. A tensile load produced in the power feeding cable 81 as the swing arm 47 pivots can be mitigated by the bent portion 81 c bending or stretching as indicated by a solid line and a dashed chain line in Fig. 6. Here, the solid line denotes a state in which the rear wheel 4 is positioned lowest (a state in which the shock absorber 69 extends), while the dashed chain line denotes a state in which the rear wheel 4 is positioned highest (a state in which the shock absorber 69 contracts).

The number of wheels of the straddle-type electric vehicle to which the invention is applied is not limited to two and hence can be determined as required.

Japanese Patent Application No. 2011-281201 filed December 22, 2011 and Japanese Patent Application No. 2012-267352 filed December 6, 2012 are incorporated herein by reference, in their entirety.

## Claims

1. A straddle-type electric vehicle, comprising:
a body frame;
a wheel;
a swing arm pivotably supported by the body frame and supporting the wheel;
a motor supported on the swing arm to drive the wheel;
a battery supported by the body frame; and
a cable for feeding electric power from the battery to the motor,
wherein part of the cable is laid out along a lateral side face of the battery so as to form a bent portion.

2. The straddle-type electric vehicle as set forth in claim 1, wherein the battery exhibits a rectangular parallelepiped shape, and the lateral side face of the battery extends along a longitudinal direction of the rectangular parallelepiped shape.

3. The straddle-type electric vehicle as set forth in claim 1 or 2, wherein the lateral side face of the battery is a flat side face facing a left-to-right direction.

4. The straddle-type electric vehicle as set forth in any one of claims 1 to 3, wherein the cable is laid out in a space formed between the lateral side face of the battery and the body frame.

5. The straddle-type electric vehicle as set forth in any one of claims 1 to 4, wherein one end of the cable is connected to an upper part of the battery.

## Amended claims

### Amended claims under Art. 19.1 PCT

**1.** A straddle-type electric vehicle, comprising:
a body frame;
a wheel;
a swing arm pivotably supported by the body frame and supporting the wheel;
a motor supported on the swing arm to drive the wheel;
a battery supported by the body frame; and
a cable for feeding electric power from the battery to the motor,
wherein part of the cable is laid out along a lateral side face of the battery so as to form a bent portion.

**2.** The straddle-type electric vehicle as set forth in claim 1, wherein the battery exhibits a rectangular parallelepiped shape, and the lateral side face of the battery extends along a longitudinal direction of the rectangular parallelepiped shape.

**3.** The straddle-type electric vehicle as set forth in claim 1 or 2, wherein the lateral side face of the battery is a flat side face facing a left-to-right direction.

**4.** The straddle-type electric vehicle as set forth in any one of claims 1 to 3, wherein the cable is laid out in a space formed between the lateral side face of the battery and the body frame.

**5.** The straddle-type electric vehicle as set forth in any one of claims 1 to 4, wherein one end of the cable is connected to an upper part of the battery.

Statement under Art. 19.1 PCT
Claim 4 has been amended so as to rearrange the wording while maintaining the original meaning (note: it is impossible to reflect the change into the English translation).

Claim 1 currently on file recites that part of the cable is laid out along a lateral side face of the battery so as to form a bent portion.

D1 cited in International Search Report fails to teach or suggest the above feature.

The invention disclosed in D1 is **characterized in that** the high-voltage wirings are located in the back side of the rear frame so as to make the high-voltage wirings less-represented.

Fig. 7 of D1 shows the high-voltage wirings located in the back side of the rear frame. However, in view of any other disclosure including Figs. 1, 4, and 5, the arrangement of the high-voltage wirings shown in Fig. 7 would be incorrect. The reason is as follows.

In view of the disclosure of Fig. 5, the battery case 37 has a dimension which is almost equivalent to the interval between the under frames 28. The interval between the rear frames 29 is almost equivalent to the interval between the under frames 28. In view of these facts, it is impossible to place the battery case 37 in a position where the battery 14 disclosed in D2 is located while laying out the back side (inner side) of the rear frame.

If the high-voltage battery 36 disclosed in D1 is placed in the position where the battery disclosed in D2 is located, it is impossible to " make the high-voltage wirings less-represented". Therefore, there is no motivation to combine the inventions disclosed in D1 and D2 to reach the claimed invention.
